# EUROPÄISCHE PATENTSCHRIFT

(11) **EP 1 798 084 B1**
(45) Veröffentlichungstag und Bekanntmachung des Hinweises auf die Patenterteilung: **10.09.2008**
(21) Anmeldenummer: 06025421.6
(22) Anmeldetag: 08.12.2006
(51) Int. Cl.: B60J 5/06

(54) **Führungsschiene für eine Schiebetür eines Kraftfahrzeugs sowie Verfahren zu ihrer Herstellung**
Guide rail for a sliding door of a motor vehicle and method for its manufacture
Rail de guidage pour une porte coulissante d'un véhicule automobile et son procédé de fabrication

(30) Priorität: 13.12.2005 DE 102005059440
(43) Veröffentlichungstag der Anmeldung: 20.06.2007
(73) Patentinhaber: BKB Profil Besitz-GmbH & Co. Kommanditgesellschaft, 59846 Sundern (DE)
(72) Erfinder: Lindemann, Dirk, 42799 Leichlingen (DE)
(74) Vertreter: Basfeld, Rainer

(56) Entgegenhaltungen:
- EP-A2- 1 110 781
- GB-A- 2 080 743
- US-A- 2 976 081

## Beschreibung

Die vorliegende Erfindung betrifft eine Führungsschiene für eine Schiebetür eines Kraftfahrzeugs, umfassend eine erste Seite, an der Führungsmittel für die Führung der Schiebetür ausgebildet sind, eine zweite Seite, die im Gebrauchzustand der Führungsschiene mit einer Seitenwand der Karosserie des Kraftfahrzeugs verbunden ist und zumindest teilweise, mittelbar und/oder unmittelbar, an dieser anliegt, sowie Dichtmittel zur zumindest teilweisen Abdichtung der Verbindung zwischen Führungsschiene und Seitenwand der Karosserie des Kraftfahrzeugs. Weiterhin betrifft die vorliegende Erfindung eine Seitenwand einer Karosserie eines Kraftfahrzeugs mit einer derartigen Führungsschiene und ein Verfahren zur Herstellung einer derartigen Führungsschiene.

Bei aus dem Stand der Technik bekannten Führungsschienen werden Klebebänder als Dichtmittel auf die zweite Seite der Führungsschiene aufgebracht. Ein derartiges Klebeband kann Schrauben oder dergleichen, die zur Verbindung von Führungsschiene und Seitenwand der Karosserie des Kraftfahrzeugs dienen, zumindest teilweise umgeben. Als nachteilig dabei erweist sich, dass unter Umständen die Anschraubpunkte zwischen Führungsschiene und Seitenwand der Karosserie auf der Außenhaut der Seitenwand sichtbar sind. Dies kann seinen Grund darin haben, dass die Führungsschiene und/oder die Seitenwand der Karosserie im Verbindungsbereich verzerrt werden, insbesondere weil Führungsschiene und Seitenwand weitgehend direkt aneinander anliegen.

Die EP. 1 110 181-A2 offenbart eine Führungsschiene nach dem Oberbegriff des Anspruchs 1.

Das der vorliegenden Erfindung zugrunde liegende Problem ist die Schaffung einer Führungsschiene der eingangs genannten Art, die unproblematischer mit einer Seitenwand der Karosserie des Kraftfahrzeugs verbunden werden kann. Weiterhin soll eine mit einer derartigen Führungsschiene verbundene Seitenwand einer Karosserie eines Kraftfahrzeugs geschaffen werden. Weiterhin soll ein Verfahren zur Herstellung einer derartigen Führungsschiene angegeben werden.

Dies wird erfindungsgemäß hinsichtlich der Führungsschiene durch eine Führungsschiene der eingangs genannten Art mit den kennzeichnenden Merkmalen des Anspruchs 1, hinsichtlich der Seitenwand der Karosserie des Kraftfahrzeugs durch eine Seitenwand mit den Merkmalen des Anspruchs 8 sowie hinsichtlich des Verfahrens durch ein Verfahren mit den Merkmalen des Anspruchs 9 erreicht. Die Unteransprüche betreffen bevorzugte Ausgestaltungen der Erfindung.

Gemäß Anspruch 1 ist vorgesehen, dass die Dichtmittel mindestens eine Schaumauflage auf der zweiten Seite der Führungsschiene umfassen, die gleichzeitig im Verbindungsbereich zwischen Führungsschiene und Seitenwand der Karosserie des Kraftfahrzeugs als Anlagefläche dient. Durch die mindestens eine Schaumauflage kann eine derartige Anlage von Führungsschiene an der Seitenwand gewährleistet werden, dass Verzerrungen von Führungsschiene und/oder Seitenwand in ihrem Verbindungsbereich weitgehend vermieden werden können. Zusätzlich kann die Schaumauflage den Verbindungsbereich von Führungsschiene und Seitenwand abdichten.

Es kann vorgesehen sein, dass an der Führungsschiene mindestens eine Schraube für die Verbindung mit der Seitenwand der Karosserie des Kraftfahrzeugs angeordnet ist, die sich von der zweiten Seite der Führungsschiene wegerstreckt. Hierbei kann es sich um eine Schweißschraube oder um eine Schraube handeln, die durch entsprechende Aussparungen an der Führungsschiene und Seitenwand der Karosserie des Kraftfahrzeugs hindurch greifen kann.

Dabei kann mindestens ein Abschnitt der Schaumauflage auf der zweiten Seite einen zumindest teilweise geschlossenen Ring um die mindestens eine Schraube bilden. Durch diese Maßnahme kann der Verbindungsbereich von Führungsschiene und Seitenwand der Karosserie des Kraftfahrzeugs im Bereich der Schraube wirksam abgedichtet werden.

Es besteht weiterhin die Möglichkeit, dass mindestens ein Abschnitt der Schaumauflage auf der zweiten Seite sich in Längsrichtung der Führungsschiene erstreckt.

Alternativ oder zusätzlich dazu besteht die Möglichkeit, dass die Ränder der zweiten Seite zumindest teilweise von einem Abschnitt der Schaumauflage bedeckt sind. Durch diese Maßnahmen kann eine weitestgehende Abdichtung des Verbindungsbereichs von Führungsschiene und Seitenwand der Karosserie des Kraftfahrzeugs gewährleistet werden.

Es besteht weiterhin die Möglichkeit, dass mindestens zwei Abschnitte der Schaumauflage auf der zweiten Seite eine voneinander verschiedene Dicke aufweisen. Dadurch können in einigen Bereichen der Führungsschiene dickere Schaumauflagen aufgebracht werden als in anderen Bereichen, um gezielt Verzerrungen vorzubeugen.

Es besteht weiterhin die Möglichkeit, dass die Schaumauflage zumindest teilweise aus Polyurethan-Schaum besteht, der insbesondere thermisch aushärtbar ist. Ein derartiger Schaum lässt sich mit vertretbarem Aufwand aufbringen und weist gute Dichteigenschaften auf.

Das Verfahren zur Herstellung einer Führungsschiene gemäß Anspruch 9 ist durch folgende Verfahrensschritte gekennzeichnet:
Positionieren der Führungsschiene relativ zu einem Beschäumroboter;
   Aufbringen einer Schaumauflage auf die zweite Seite der Führungsschiene;
Aushärten der Schaumauflage.

Dabei kann vorgesehen sein, dass die Schaumauflage durch Erhitzen auf eine Temperatur zwischen 70° C und 90° C, insbesondere durch Erhitzen auf eine Temperatur von etwa 80° C ausgehärtet wird.

Es besteht weiterhin die Möglichkeit, dass die Führungsschiene nach dem Aufbringen der Schaumauflage auf ein Transportmittel aufgebracht wird, das die Führungsschiene einem Thermosystem zur Aushärtung zuführt. Dieses Transportmittel, das beispielsweise als Transportband ausgeführt ist, kann somit sowohl zur Abführung der Führungsschienen als auch der Durchführung durch ein Thermosystem dienen.

Es kann vorgesehen sein, dass die Führungsschiene vor dem Aufbringen der Schaumauflage gereinigt wird, insbesondere vermittels einer Plasmabehandlung. Dies kann insbesondere bei Verschmutzungen mit Öl notwendig sein, um das Haften des Schaums auf der Führungsschiene zu verbessern.

Es besteht weiterhin die Möglichkeit, dass die Führungsschiene vor dem Aufbringen der Schaumauflage vermessen wird, so dass die Beschäumung entsprechend der Ist-Form der Führungsschiene erfolgen kann. Durch einen derartigen Abgleich zwischen Soll- und Ist-Form kann der Beschäumroboter derart nachgeführt werden, dass eine optimale Beschäumung erreicht wird.

Weiterhin kann vorgesehen sein, die Führungsschiene vor dem Aufbringen der Schaumauflage in eine lagerichtige Position versetzt wird, beispielsweise durch Einspannen in einer der Führungsschiene angepassten Vorrichtung. Durch die Versetzung in eine lagerichtige Position wird eine Beschäumung in den vorgesehenen Bereichen gewährleistet.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Ansicht einer erfindungsgemäßen Seitenwand der Karosserie eines Kraftfahrzeugs mit einer daran angebrachten erfindungsgemäßen Führungsschiene;
- Fig. 2: eine perspektivische Ansicht einer erfindungsgemäßen Führungsschiene;
- Fig. 3: eine Ansicht gemäß dem Pfeil III in Fig. 2;
- Fig. 4: eine Ansicht gemäß den Pfeilen IV-IV in Fig. 2.

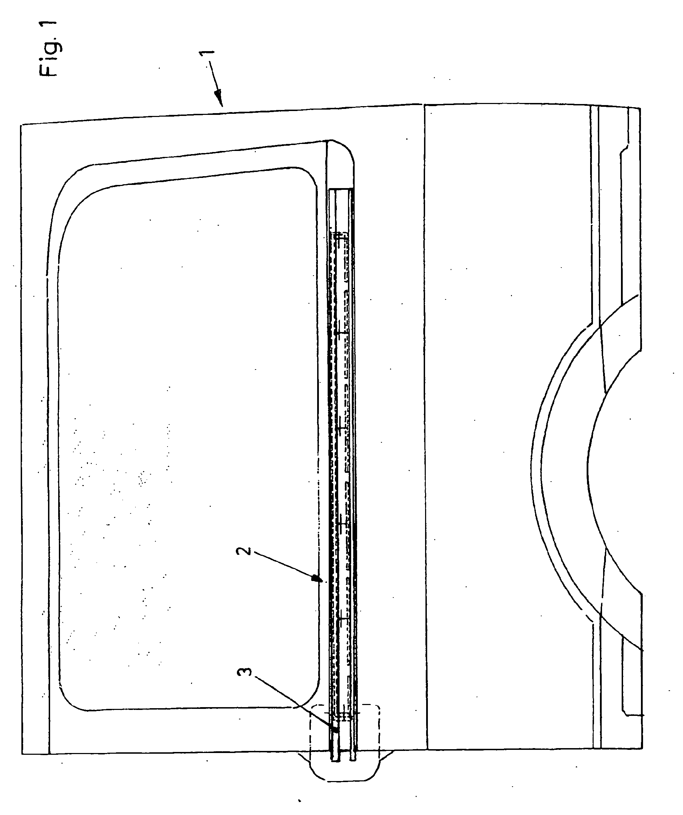

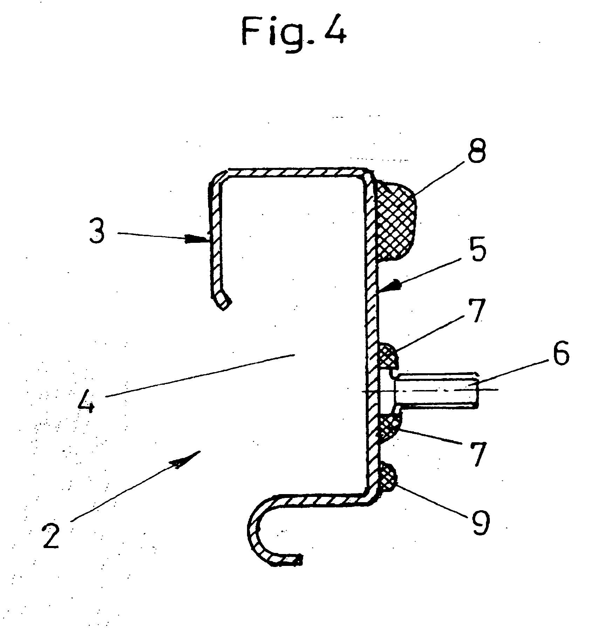

Aus Fig. 1 ist eine erfindungsgemäße Seitenwand 1 einer Karosserie eines Kraftfahrzeugs mit einer daran angebrachten erfindungsgemäßen Führungsschiene 2 ersichtlich. Die Führungsschiene 2 erstreckt sich dabei in Längsrichtung der Seitenwand 1, wobei diese Längsrichtung der Fahrzeuglängsrichtung entspricht. Auf der von der Seitenwand 1 der Karosserie des Kraftfahrzeugs abgewandten ersten Seite 3 weist die Führungsschiene 2 eine als Führungsmittel dienende Längsnut 4 auf (siehe dazu auch Fig. 4), in die entsprechende zur Führung der Schiebetür dienende Führungsmittel eingreifen können.

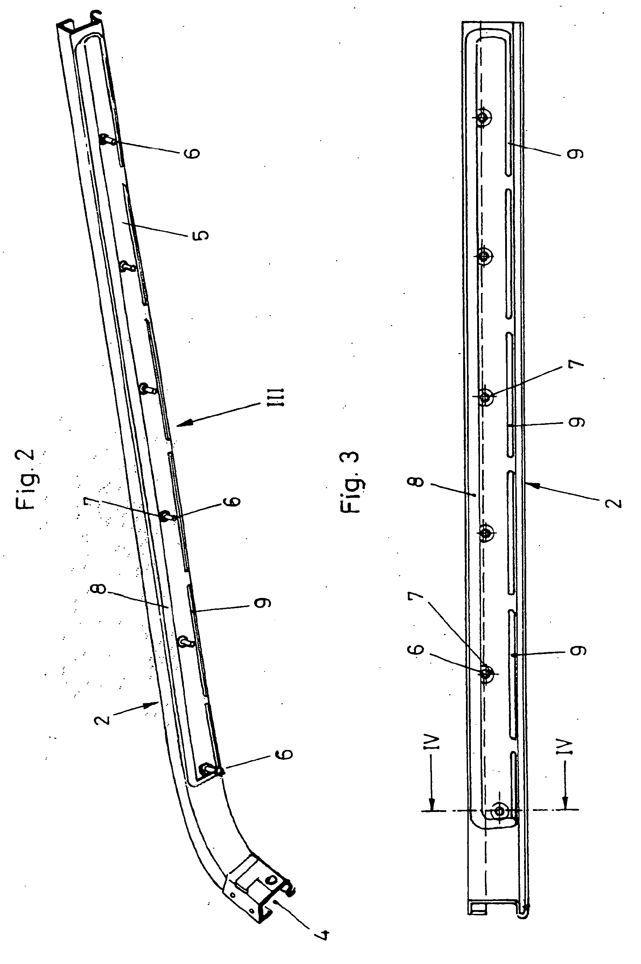

Aus Fig. 2 ist ersichtlich, dass sich von der zweiten, der Seitenwand 1 der Karosserie des Kraftfahrzeugs zugewandten Seite 5 der Führungsschiene 2 Schrauben 6 wegerstrecken, die zur Verbindung der Führungsschiene 2 mit der Seitenwand 1 dienen. Fig. 2, Fig. 3 und Fig. 4 zeigen, dass um eine jede der Schrauben 6 herum ein ringförmiger Abschnitt 7 einer Schaumauflage angeordnet ist. An dem in Fig. 3 unteren Rand der zweiten Seite 5 der Führungsschiene 2 erstreckt sich in deren Längsrichtung ein weiterer Abschnitt 8 der Schaumauflage. Weiterhin erstrecken sich an dem in Fig. 3 oberen Rand der zweiten Seite 5 der Führungsschiene 2 in deren Längsrichtung mehrere voneinander separierte längliche Abschnitt 9 der Schaumauflage. Fig. 3 lässt sich ebenfalls entnehmen, dass die Enden des unteren Abschnittes 8 derart in Querrichtung der Führungsschiene 2 umgebogen sind, dass sie an die jeweils benachbarten oberen Abschnitte 9 anschließen. Auf diese Weise ergibt sich ein endseitig dichter Abschluss des den die Schrauben 6 umgebenden Verbindungsbereichs zwischen Seitenwand 1 der Karosserie des Kraftfahrzeugs und Führungsschiene 2.

Aus Fig. 4 ist ersichtlich, dass der sich über einen Großteil der Länge der Führungsschiene 2 erstreckende Abschnitt 8 in Verbindungsrichtung eine größere Dicke aufweist als der ringförmige Abschnitt 7 oder einer oder jeder der in Längsrichtung voneinander separierten Abschnitte 9. Durch diese Gestaltung der Abschnitte 7, 8, 9 kann gezielt auf die Anlage der Führungsschiene 2 an der Seitenwand 1 der Karosserie des Kraftfahrzeugs Einfluss genommen werden. Es besteht durchaus die Möglichkeit, dass sämtliche Abschnitte 7, 8, 9 gleich dick sind oder dass andere Unterschiede zwischen den einzelnen Abschnitten 7, 8, 9 als in Fig. 4 abgebildet vorgesehen sind.

Die Schaumauflage kann aus einem Polyurethanschaum bestehen, insbesondere aus einem thermisch aushärtbarem Polyurethanschaum. Beispielsweise kann ein Schaum verwendet werden, wie er in dem europäischen Patent EP 0 776 745 B1 beschrieben ist.

Eine erfindungsgemäße Führungsschiene 2 kann beispielsweise nach folgendem Verfahren hergestellt werden:
- Die Führungsschiene wird in eine Fixier- und/oder Spannvorrichtung eingelegt und in dieser optional auch lagegerecht positioniert.
- Die Fixier- und/oder Spannvorrichtung wird einem Beschäumroboter zugeführt beziehungsweise relativ zu diesem positioniert. Dies kann durch eine lineare Zuführung und/oder über einen Drehtisch erfolgen.
- Die tatsächliche Form der Führungsschiene wird ermittelt. Diese ermittelte Ist-Form der Führungsschiene wird mit einer vorgegebenen Soll-Form der Führungsschiene verglichen. Entsprechend der ermittelten Ist-Form wird der Beschäumroboter angesteuert. Es besteht die Möglichkeit, auf die Ermittlung der Ist-Form der Führungsschiene zu verzichten, wenn die Führungsschiene in der Spannvorrichtung lagerichtig fixiert wurde.
- Je nach Verschmutzungsgrad der Führungsschiene, insbesondere bei einer Verschmutzung mit Öl, kann es notwendig sein, die Führungsschiene zu reinigen, insbesondere durch eine Plasmabehandlung. Auf einer entsprechend gereinigten Führungsschiene kann der Schaum besser haften.
- Der Schaum wird auf die Führungsschiene aufgebracht, beispielsweise in der Anordnung gemäß Fig. 3 und Fig. 4.
- Die geschäumte Führungsschiene wird von dem Beschäumroboter abgeführt.
- Die beschäumte Führungsschiene wird der Fixier- und/oder Spannvorrichtung entnommen. Dies kann manuell oder mittels eines Handhabungsgeräts erfolgen.
- Die beschäumte Führungsschiene wird auf einem Transportband abgelegt.
- Das Transportband führt die beschäumte Führungsschiene einem Thermosystem zu, durch dieses hindurch und von diesem weg. In dem Thermosystem erhitzt sich die durchgeführte Führungsschiene auf eine Temperatur von etwa 80° C, so dass dadurch der Schaum aushärtet.
- Daran anschließend wird die Führungsschiene abgekühlt und verpackt.

## Patentansprüche

1. Führungsschiene für eine Schiebetür eines Kraftfahrzeugs, umfassend
- eine erste Seite (3), an der Führungsmittel für die Führung der Schiebetür ausgebildet sind,
- eine zweite Seite (5), die im Gebrauchzustand der Führungsschiene (2) mit einer Seitenwand (1) der Karosserie des Kraftfahrzeugs verbunden ist und zumindest teilweise, mittelbar und/oder unmittelbar, an dieser anliegt, sowie
- Dichtmittel zur zumindest teilweisen Abdichtung der Verbindung zwischen Führungsschiene (2) und Seitenwand (1) der Karosserie des Kraftfahrzeugs,
**dadurch gekennzeichnet, dass**
- die Dichtmittel mindestens eine Schaumauflage auf der zweiten Seite (5) der Führungsschiene (2) umfassen, die gleichzeitig im Verbindungsbereich zwischen Führungsschiene (2) und Seitenwand (1) der Karosserie des Kraftfahrzeugs als Anlagefläche dient.

2. Führungsschiene nach Anspruch 1, **dadurch gekennzeichnet, dass** an der Führungsschiene (2) mindestens eine Schraube (6) für die Verbindung mit der Seitenwand (1) der Karosserie des Kraftfahrzeugs angeordnet ist, die sich von der zweiten Seite (5) der Führungsschiene (2) wegerstreckt.

3. Führungsschiene nach Anspruch 2, **dadurch gekennzeichnet, dass** mindestens ein Abschnitt (7) der Schaumauflage auf der zweiten Seite (5) einen zumindest teilweise geschlossenen Ring um die mindestens eine Schraube (6) bildet.

4. Führungsschiene nach einem der Ansprüche 1 bis 3, **dadurch gekennzeichnet, dass** mindestens ein Abschnitt (8, 9) der Schaumauflage auf der zweiten Seite (5) sich in Längsrichtung der Führungsschiene (2) erstreckt.

5. Führungsschiene nach einem der Ansprüche 1 bis 4, **dadurch gekennzeichnet, dass** die Ränder der zweiten Seite (5) zumindest teilweise von einem Abschnitt (8, 9) der Schaumauflage bedeckt sind.

6. Führungsschiene nach einem der Ansprüche 1 bis 5, **dadurch gekennzeichnet, dass** mindestens zwei Abschnitte (7, 8, 9) der Schaumauflage auf der zweiten Seite (5) eine voneinander verschiedene Dicke aufweisen.

7. Führungsschiene nach einem der Ansprüche 1 bis 6, **dadurch gekennzeichnet, dass** die Schaumauflage zumindest teilweise aus Polyurethan-Schaum besteht, der insbesondere thermisch aushärtbar ist.

8. Seitenwand einer Karosserie eines Kraftfahrzeugs, umfassend eine Führungsschiene (2), die mit der Seitenwand (1) der Karosserie des Kraftfahrzeugs verbunden ist, **gekennzeichnet durch** eine Führungsschiene (2) nach einem der Ansprüche 1 bis 7.

9. Verfahren zur Herstellung einer Führungsschiene nach einem der Ansprüche 1 bis 7, **gekennzeichnet durch** folgende Verfahrensschritte:
- Positionieren der Führungsschiene relativ zu einem Beschäumroboter;
- Aufbringen einer Schaumauflage auf die zweite Seite der Führungsschiene;
- Aushärten der Schaumauflage.

10. Verfahren nach Anspruch 9, **dadurch gekennzeichnet, dass** die Schaumauflage durch Erhitzen auf eine Temperatur zwischen 70° C und 90° C, insbesondere durch Erhitzen auf eine Temperatur von etwa 80° C ausgehärtet wird.

11. Verfahren nach einem der Ansprüche 9 oder 10, **dadurch gekennzeichnet, dass** die Führungsschiene nach dem Aufbringen der Schaumauflage auf ein Transportmittel aufgebracht wird, das die Führungsschiene einem Thermosystem zur Aushärtung zuführt.

12. Verfahren nach einem der Ansprüche 9 bis 11, **dadurch gekennzeichnet, dass** die Führungsschiene falls notwendig vor dem Aufbringen der Schaumauflage gereinigt wird, beispielsweise vermittels einer Plasmabehandlung.

13. Verfahren nach einem der Ansprüche 9 bis 12, **dadurch gekennzeichnet, dass** die Führungsschiene vor dem Aufbringen der Schaumauflage vermessen wird, so dass die Beschäumung entsprechend der Ist-Form der Führungsschiene erfolgen kann.

14. Verfahren nach einem der Ansprüche 9 bis 13, **dadurch gekennzeichnet, dass** die Führungsschiene vor dem Aufbringen der Schaumauflage in eine lagerichtige Position versetzt wird, beispielsweise durch Einspannen in einer der Führungsschiene angepassten Vorrichtung.

## Claims

1. Guide rail for a sliding door of a motor vehicle, comprising
- a first side (3) on which are formed guide means for guiding the sliding door,
- a second side (5) which, in the use state of the guide rail (2), is connected to a side wall (1) of the body of the motor vehicle and at least partially bears indirectly and/or directly against said side wall (1), and
- sealing means for the at least partial sealing of the connection between the guide rail (2) and side wall (1) of the body of the motor vehicle,
**characterized in that**
- the sealing means comprise at least one foam layer on the second side (5) of the guide rail (2), which foam layer simultaneously serves as a contact surface in the connecting region between the guide rail (2) and side wall (1) of the body of the motor vehicle.

2. Guide rail according to Claim 1, **characterized in that** at least one screw (6) for the connection to the side wall (1) of the body of the motor vehicle is arranged on the guide rail (2), which screw (6) extends away from the second side (5) of the guide rail (2).

3. Guide rail according to Claim 2, **characterized in that** at least one section (7) of the foam layer on the second side (5) forms an at least partially closed ring around the at least one screw (6).

4. Guide rail according to one of Claims 1 to 3, **characterized in that** at least one section (8, 9) of the foam layer on the second side (5) extends in the longitudinal direction of the guide rail (2).

5. Guide rail according to one of Claims 1 to 4, **characterized in that** the edges of the second side (5) are at least partially covered by a section (8, 9) of the foam layer.

6. Guide rail according to one of Claims 1 to 5, **characterized in that** at least two sections (7, 8, 9) of the foam layer on the second side (5) have different thicknesses from one another.

7. Guide rail according to one of Claims 1 to 6, **characterized in that** the foam layer is composed at least in part of polyurethane foam which is in particular thermally hardenable.

8. Side wall of a body of a motor vehicle, comprising a guide rail (2) which is connected to the side wall (1) of the body of the motor vehicle, **characterized by** a guide rail (2) according to one of Claims 1 to 7.

9. Method for manufacturing a guide rail according to one of Claims 1 to 7, **characterized by** the following method steps:
- positioning the guide rail relative to a foaming robot;
- applying a foam layer to the second side of the guide rail;
- hardening the foam layer.

10. Method according to Claim 9, **characterized in that** the foam layer is hardened by means of heating to a temperature of between 70°C and 90°C, in particular by means of heating to a temperature of approximately 80°C.

11. Method according to one of Claims 9 or 10, **characterized in that**, after the application of the foam layer, the guide rail is placed onto a transport means which supplies the guide rail to a thermal system for hardening.

12. Method according to one of Claims 9 to 11, **characterized in that** the guide rail is cleaned before the application of the foam layer if necessary, for example by means of plasma treatment.

13. Method according to one of Claims 9 to 12, **characterized in that** the guide rail is measured before the application of the foam layer, such that the foaming can take place corresponding to the actual shape of the guide rail.

14. Method according to one of Claims 9 to 13, **characterized in that**, before the application of the foam layer, the guide rail is placed into a correct positional arrangement, for example by being braced into a device which is matched to the guide rail.

## Revendications

1. Rail de guidage pour une porte coulissante d'un véhicule automobile, comprenant
- un premier côté (3) sur lequel sont réalisés des moyens de guidage pour le guidage de la porte coulissante,
- un deuxième côté (5) qui est connecté dans l'état d'utilisation du rail de guidage (2) à une paroi latérale (1) de la carrosserie du véhicule automobile et qui s'applique au moins en partie contre celle-ci de manière indirecte et/ou directe, ainsi
- que des moyens d'étanchéité pour réaliser l'étanchéité au moins partielle de la connexion entre le rail de guidage (2) et la paroi latérale (1) de la carrosserie du véhicule automobile,
**caractérisé en ce que**
- les moyens d'étanchéité comprennent au moins un revêtement en mousse du deuxième côté (5) du rail de guidage (2), qui sert en même temps de surface d'appui dans la région de connexion entre le rail de guidage (2) et la paroi latérale (1) de la carrosserie du véhicule automobile.

2. Rail de guidage selon la revendication 1, **caractérisé en ce qu'**au moins une vis (6) pour la connexion à la paroi latérale (1) de la carrosserie du véhicule automobile est disposée sur le rail de guidage (2), laquelle s'étend depuis le deuxième côté (5) du rail de guidage (2).

3. Rail de guidage selon la revendication 2, **caractérisé en ce qu'**au moins une portion (7) du revêtement en mousse forme du deuxième côté (5) une bague au moins partiellement fermée autour de l'au moins une vis (6).

4. Rail de guidage selon l'une quelconque des revendications 1 à 3, **caractérisé en ce qu'**au moins une portion (8, 9) du revêtement en mousse s'étend sur le deuxième côté (5) dans la direction longitudinale du rail de guidage (2).

5. Rail de guidage selon l'une quelconque des revendications 1 à 4, **caractérisé en ce que** les bords du deuxième côté (5) sont au moins en partie recouverts par une portion (8, 9) du revêtement en mousse.

6. Rail de guidage selon l'une quelconque des revendications 1 à 5, **caractérisé en ce qu'**au moins deux portions (7, 8, 9) du revêtement en mousse présentent sur le deuxième côté (5) des épaisseurs différentes l'une de l'autre.

7. Rail de guidage selon l'une quelconque des revendications 1 à 6, **caractérisé en ce que** le revêtement en mousse se compose au moins en partie de mousse de polyuréthanne, qui peut durcir, en particulier thermiquement.

8. Paroi latérale d'une carrosserie d'un véhicule automobile, comprenant un rail de guidage (2), qui est connecté à la paroi latérale (1) de la carrosserie du véhicule automobile, **caractérisée par** un rail de guidage (2) selon l'une quelconque des revendications 1 à 7.

9. Procédé de fabrication d'un rail de guidage selon l'une quelconque des revendications 1 à 7, **caractérisé par** les étapes de procédé suivantes :
- positionnement du rail de guidage par rapport à un robot de moussage ;
- application d'un revêtement en mousse sur le deuxième côté du rail de guidage ;
- durcissement du revêtement en mousse.

10. Procédé selon la revendication 9, **caractérisé en ce que** le revêtement en mousse est durci par chauffage à une température comprise entre 70°C et 90°C, en particulier par chauffage à une température d'environ 80°C.

11. Procédé selon l'une quelconque des revendications 9 ou 10, **caractérisé en ce que** le rail de guidage, après l'application du revêtement en mousse, est placé sur un moyen de transport qui amène le rail de guidage à un système thermique en vue de son durcissement.

12. Procédé selon l'une quelconque des revendications 9 à 11, **caractérisé en ce que** le rail de guidage, si nécessaire, est nettoyé avant l'application du revêtement en mousse, par exemple au moyen d'un traitement plasmatique.

13. Procédé selon l'une quelconque des revendications 9 à 12, **caractérisé en ce que** le rail de guidage est mesuré avant l'application du revêtement en mousse, de sorte que le moussage puisse avoir lieu de manière correspondant à la forme réelle du rail de guidage.

14. Procédé selon l'une quelconque des revendications 9 à 13, **caractérisé en ce que** le rail de guidage est amené dans une position correcte avant l'application du revêtement en mousse, par exemple par serrage dans un dispositif adapté au rail de guidage.
